# EUROPÄISCHE PATENTSCHRIFT

(11) **EP 1 363 825 B1**
(45) Veröffentlichungstag und Bekanntmachung des Hinweises auf die Patenterteilung: **16.06.2010**
(21) Anmeldenummer: 02701217.8
(22) Anmeldetag: 22.01.2002
(51) Int. Cl.: B62D 5/00, B62D 6/00

(54) **VERFAHREN UND COMPUTERPROGRAMM ZUM BETRIEB EINER FAHRZEUGLENKUNG, STEUER- UND/ODER REGELGERÄT FÜR EINE FAHRZEUGLENKUNG SOWIE FAHRZEUGLENKUNG**
METHOD AND COMPUTER PROGRAM FOR OPERATING A VEHICLE STEERING SYSTEM, CONTROL AND/OR REGULATING DEVICE FOR A VEHICLE STEERING SYSTEM AND CORRESPONDING VEHICLE STEERING SYSTEM
PROCEDE ET PROGRAMME D'ORDINATEUR PERMETTANT DE FAIRE FONCTIONNER LA DIRECTION D'UN VEHICULE, APPAREIL DE COMMANDE ET/OU DE REGLAGE DE LA DIRECTION D'UN VEHICULE ET DIRECTION DU VEHICULE

(30) Priorität: 24.02.2001 DE 10109085
(43) Veröffentlichungstag der Anmeldung: 26.11.2003
(73) Patentinhaber: ROBERT BOSCH GMBH, 70442 Stuttgart (DE); ZF Lenksysteme GmbH, 73522 Schwäbisch Gmünd (DE)
(72) Erfinder: DOMINKE, Peter, 74321 Bietigheim-Bissingen (DE); CAO, Chi-Thuan, 70825 Korntal-Muenchingen (DE); PFEIFFER, Wolfgang, 71723 Grossbottwar (DE); LEIMBACH, Klauss-Dieter, 73569 Eschach (DE); HARTER, Werner, 75428 Illingen (DE); HAFERMALZ, Jens, 76829 Landau-Mörzheim (DE); HAUSSMANN, Matthias, 89561 Ballmertshofen (DE); KNÖDLER, Helmut, 73547 Lorch (DE); LOHNER, Herbert, 71292 Friolzheim (DE); LOEFFLER, Thomas, 74182 Obersulm (DE); SCHUELE, Juergen, 73525 Schwäbisch Gmünd (DE)
(86) Internationale Anmeldenummer: PCT/DE2002/000185
(87) Internationale Veröffentlichungsnummer: WO 2002/068255

(56) Entgegenhaltungen:
- DE-A- 19 842 624

## Beschreibung

### Stand der Technik

Die Erfindung betrifft ein Verfahren nach dem Oberbegriff des Anspruchs 1. Die Erfindung betrifft ebenfalls ein entsprechendes Computerprogramm sowie ein entsprechendes steuer- und/oder Regelgerät sowie eine entsprechende Fahrzeuglenkung.

In der DE 195 40 956 C1 ist eine Fahrzeuglenkung beschrieben, bei der sich die sonst starre mechanische Antriebsverbindung zwischen Lenkrad und einer Lenkgetriebeanordnung an den gelenkten Fahrzeugrädern durch Öffnen einer Kupplung auftrennen lässt. In diesem Betriebszustand handelt es sich bei dieser Fahrzeuglenkung um ein Steer-by-Wire-Lenksystem, bei dem das Lenkrad lediglich mittelbar mit der Lenkgetriebeanordnung gekoppelt ist. Abhängig von der Lenkradstellung wird eine elektronische Stellgröße gebildet, welche zur Regelung des Radwinkels verwendet wird.

Unter dem Radwinkel wird hier ein Lenkausschlag mindestens eines Rads verstanden, welcher erforderlich ist, um das Fahrzeug in einer gewünschten Richtung zu lenken. Der Radwinkel kann dabei nicht in beliebigem Umfange verstellt werden. Die Verstellung ist nur zwischen zwei Extrempositionen möglich, welche durch einen mechanischen Anschlag definiert sind. Da bei getrennter Kupplung keine Rückmeldung der auf die Räder einwirkenden Kräfte über die Lenksäule an das Lenkrad erfolgt, ein solches Lenkgefühl jedoch für die sichere Führung des Kraftfahrzeugs erforderlich ist, muss das Handmoment am Lenkrad synthetisch erzeugt werden. Hierzu ist bei der bekannten Fahrzeuglenkung ein Handkraftsteller vorgesehen, der angesteuert von einer Steuerelektronik am Lenkrad einen entsprechenden Betätigungswiderstand bewirkt.

Es wurde nun jedoch festgestellt, dass zur sicheren Führung eines Kraftfahrzeugs nicht nur die Übermittlung der Rückwirkungen der Strasse an den Fahrer über das Lenkrad erforderlich ist, sondern der Fahrer auch darüber informiert werden muss, ob der maximale Lenkeinschlag der Räder, also der maximale Radwinkel, erreicht ist.

Auch aus der DE 198 42 624 A1, welche die Basis für den Oberbegriff des Anspruchs 1 bildet, ist ein Verfahren zum Betrieb einer Fahrzeuglenkung bekannt, bei dem mindestens aus der Stellung eines Bedienelements eine elektronische Sollgröße für die Steuerung eines Radwinkels gebildet wird. Die Sollgröße hängt dabei im Sinne einer variablen Lenkübersetzung auch von fahrzustandsspezifischen Parametern ab.

Die vorliegende Erfindung hat daher die Aufgabe, ein Verfahren der eingangs genannten Art so weiterzubilden, dass dem Fahrer mit hoher Zuverlässigkeit und ohne die Notwendigkeit zusätzlicher Komponenten Informationen über das Erreichen des maximalen Radwinkels gegeben werden können.

Diese Aufgabe wird durch ein Verfahren mit den Merkmalen des Anspruchs 1, durch ein Computerprogramm gemäß Anspruch 8, durch ein Steuergerät gemäß Anspruch 9 und durch eine Fahrzeuglenkung gemäß Anspruch 10 gelöst.

### Vorteile der Erfindung

Mit dem erfindungsgemäßen Verfahren ist es möglich, dem Fahrer eine eindeutige Information über das Erreichen des maximalen Lenkwinkels zu geben, da durch die erfindungsgemäße Maßnahme eine weitere Bewegung des Bedienelementes in Lenkrichtung bei Erreichen des maximalen Radwinkels unmöglich gemacht wird. Im Grunde wird also bei Erreichen des maximalen Radwinkels das Steer-by-Wire-Prinzip aufgehoben und durch das Herstellen der mechanischen Verbindung zwischen Rad und Bedienelement eine übliche mechanische Fahrzeuglenkung geschaffen. Der Fahrer des Kraftfahrzeugs erhält so eine eindeutige Information darüber, dass der maximale Radwinkel erreicht ist, und kann entsprechend reagieren.

Mit dem erfindungsgemäßen Verfahren ist es ferner möglich, diese Information bereitzustellen, ohne dass zusätzliche Komponenten bei der Fahrzeuglenkung erforderlich sind. Durch die Mitteilung der mechanischen Begrenzungen an den Fahrer wird auch sichergestellt, dass der von ihm geäußerte Lenkwunsch tatsächlich ausführbar ist und der Fahrer nicht irrigerweise davon ausgehen kann, dass eine stärkere Verstellung des Radwinkels möglich ist. Mit dem erfindungsgemäßen Verfahren wird also auch die Sicherheit bei der Steuerung eines Fahrzeugs erhöht. Außerdem wird verhindert, dass Kabel, welche das Bedienelement mit dem stationären Bereich der Fahrzeuglenkung verbinden, durch eine zu starke Verstellung der Bedienelements abgerissen werden.

Bei modernen Steer-by-wire-Fahrzeuglenkungen ist es möglich, in jenen Betriebszuständen, in denen keine mechanische Verbindung zwischen Bedienelement und Rad vorliegt, die Übersetzung zwischen der Position des Bedienelements und der Stellung des Rades variabel zu gestalten. Durch diese variable Lenkübersetzung ist es möglich, beispielsweise Fahrbahneinflüsse sowie Fahrzustandseinflüsse bei der Bestimmung der Sollgröße für den Radwinkel zu berücksichtigen. Dabei ist es jedoch möglich, dass die Stellungen des Bedienelements und der Räder nicht mehr synchron sind.

Das erfindungsgemäße Verfahren dient dazu, eine Synchronisierung der jeweiligen Stellungen zu erreichen, bevor die mechanische Verbindung zwischen Bedienelement und Rad hergestellt wird. Dies bedeutet nichts anderes, als dass in der Extremstellung des Bedienelementes auch die Räder in ihrer Extremstellung sind, wohingegen in der Nullstellung des Bedienelementes auch die Räder in ihrer Nullstellung sind.

Vorteilhafte Weiterbildungen der Erfindung sind in Unteransprüchen angegeben.

Besonders bevorzugt ist, dass dann, wenn die Sollgröße einen Grenzwert erreicht oder überschreitet, der tatsächliche Radwinkel konstant gehalten wird. Diese Weiterbildung spielt dann eine Rolle, wenn der maximale Radwinkel bereits erreicht ist, bevor sich das Bedienelement in seiner Soll-Endstellung befindet. In diesem Fall führt eine weitere Eingabe am Bedienelement zu keiner Vergrößerung des Radwinkels.

Um die Vorteile einer Steer-by-Wire-Fahrzeuglenkung im normalen Betriebszustand des Kraftfahrzeugs nutzen zu können, ist es erforderlich, dass die mechanische Verbindung zwischen Bedienelement und Rad möglichst rasch aufgehoben wird, sobald sich das Rad und das Bedienelement aus ihrer jeweiligen Endstellung herausbewegt haben. Um jedoch Schwingungen in der Fahrzeuglenkung bzw. ein fortlaufendes mechanisches Verbinden des Bedienelementes mit dem Rad und ein nachfolgendes Trennen zu vermeiden, wird bei einer besonders bevorzugten Weiterbildung des erfindungsgemäßen Verfahrens vorgeschlagen, dass die mechanische Verbindung zwischen Bedienelement und Rad erst dann wieder aufgehoben wird, wenn der Radwinkel unterhalb eines Grenzwerts liegt, welcher kleiner ist als der mechanische Grenzwert; sodass eine Hysterese gebildet wird.

Dabei wird besonders bevorzugt, dass die mechanische Verbindung erst dann wieder aufgehoben wird, wenn der Radwinkel null ist und das Bedienelement in seiner Mittelstellung ist. Der Übergang von einer üblichen mechanischen Lenkung zu einer Steer-by-Wire-Lenkung erfolgt hier also ausschließlich im Bereich der Mittelstellung der Fahrzeuglenkung. Der Grund hierfür ist, dass in diesem Bereich keine Fahrzustände zu erwarten sind, in denen der Übergang zu ungewollten Veränderungen des Radwinkels führen könnte.

Denkbar ist auch, dass dann, wenn die Sollgröße oberhalb eines Grenzwerts liegt, welcher vorzugsweise dem maximalen Radwinkel entspricht, ein Warnsignal ausgelöst wird. Diese Weiterbildung des erfindungsgemäßen Verfahrens ist besonders vorteilhaft in Verbindung mit einer variablen Lenkübersetzung, bei der es vorkommen kann, dass der maximale Radwinkel erreicht wird, bevor das Bedienelement seine Soll-Endstellung erreicht hat. In diesem Fall wird der Fahrer durch das Warnsignal darauf aufmerksam gemacht, dass sich die Fahrzeuglenkung in einem Bereich befindet, in dem eine Erhöhung der Eingabe am Bedienelement keine Vergrößerung des Radwinkels mehr bewirken kann. Dies bedeutet eine Erhöhung der Sicherheit beim Betrieb eines solchen Kraftfahrzeugs.

Für ein solches Warnsignal sind unterschiedliche Ausbildungen möglich. So ist es denkbar, dass das Warnsignal ein akustisches und/oder ein optisches und/oder ein haptisches Signal, insbesondere eine Vibration des Bedienelements, umfasst. Insbesondere ein solches haptisches Signal, welches aus der Luftfahrt in Form eines "Stick-Shakers" bekannt ist, kann den Fahrer deutlich und zuverlässig über die Situation der Fahrzeuglenkung informieren, ohne dass eine Überflutung durch akustische oder optische Reize zu befürchten ist.

Bei einer anderen Weiterbildung wird vorgeschlagen, dass dann, wenn die Sollgröße oberhalb eines Grenzwerts liegt, das zur Verstellung des Bedienelements erforderliche Moment erhöht wird. Dies bedeutet, dass dann, wenn sich der Radwinkel seinem mechanischen Anschlag nähert, der Fahrer zur Erhöhung der Eingabe am Bedienelement ein erhöhtes Handmoment überbrücken muss. Auch dies dient dazu, dem Fahrer zuverlässig mitzuteilen, dass er sich dem maximal möglichen Radwinkel nähert, ohne ihn mit optischen oder akustischen Reizen zu überfordern.

Die Erfindung betrifft auch ein Computerprogramm, welches zur Durchführung des obigen Verfahrens geeignet ist, wenn es auf einem Computer ausgeführt wird. Dabei ist besonders bevorzugt, wenn das Computerprogramm auf einem Speicher, insbesondere auf einem Flash-Memory, abgespeichert ist.

Die Erfindung betrifft ferner ein Steuer- und/oder Regelgerät für eine Fahrzeuglenkung, welches aus der Stellung eines Bedienelements eine elektronische Stellgröße für die Steuerung und/oder Regelung des Radwinkels mindestens eines Rads des Fahrzeugs bildet, wobei der maximale Radwinkel mechanisch begrenzt ist, und welches das Rad und das Bedienelement in mindestens einem Betriebszustand mechanisch voneinander trennen und in mindestens einem anderen Betriebszustand mechanisch miteinander verbinden kann.

Um dem Fahrer einen zuverläsigen Hinweis darauf geben zu können, dass der Radwinkel der steuerbaren Räder eine Extremstellung erreicht hat, wird vorgeschlagen, dass das Steuer- und/oder Regelgerät zur Durchführung des obigen Verfahrens geeignet ist. Dabei wird besonders bevorzugt, dass das Steuer- und/oder Regelgerät mit einem Computerprogramm der obigen Art versehen ist.

Die Erfindung betrifft auch eine Fahrzeuglenkung, mit einem Bedienelement, mit einer Verarbeitungseinheit, welches aus der Stellung des Bedienelements eine elektronische Stellgröße für die Steuerung und/oder Regelung des Radwinkels mindestens eines Rads des Fahrzeugs bildet, mit einem mechanischen Anschlag für den maximalen Radwinkel, und mit einer schaltbaren Kupplung, durch die das Rad und das Bedienelement in mindestens einem Betriebszustand mechanisch voneinander getrennt und in mindestens einem anderen Betriebszustand mechanisch miteinander verbunden werden können.

Um bei einer solchen Fahrzeuglenkung dem Fahrer zuverlässige Informationen darüber bieten zu können, ob der Radwinkel einen maximalen Wert erreicht hat, wird erfindungsgemäß vorgeschlagen, dass die Verarbeitungseinheit so ausgebildet ist, dass sie dann, wenn der Radwinkel aufgrund des mechanischen Anschlags seinen Maximalwert erreicht, die mechanische Verbindung zwischen Rad und Bedienelement herstellt, sodass ein Anschlag für das Bedienelement gebildet wird. Durch diese Maßnahme wird die Sicherheit bei der Benutzung der erfindungsgemäßen Fahrzeuglenkung erheblich erhöht.

Dabei wird besonders bevorzugt, dass das Bedienelement ein Lenkrad umfasst. Denkbar ist aber auch z.B. die Verwendung eines Steuerknüppels. Ferner wird besonders bevorzugt, wenn die Fahrzeuglenkung ein Steuer- und/oder Regelgerät der oben beschriebenen Art umfasst.

Nachfolgend werden Ausführungsbeispiele der Erfindung unter Bezugnahme auf die beiliegende Zeichnung im Detail erläutert. In der Zeichnung zeigen:
- Figur 1: ein schematisches Blockschaltbild einer Steer-by- Wire-Fahrzeuglenkung;
- Figur 2: ein Flussdiagramm eines ersten Ausführungsbeispiels eines Verfahrens zum Betreiben der Fahrzeuglenkung von Figur 1;
- Figur 3: ein Diagramm zur Erläuterung des Verfahrens von Figur 2, in dem ein normierter Radwinkel über einem normierten Lenkradwinkel aufgetragen ist;
- Figur 4: ein weiteres Diagramm zur Erläuterung des Verfahrens von Figur 2, in dem ein Handmoment an einem Lenkrad über dem normierten Lenkradwinkel aufgetragen ist;
- Figur 5: ein Diagramm zur Erläuterung eines zweiten Ausführungsbeispiels eines Verfahrens zum Betreiben der Fahrzeuglenkung von Figur 1, in dem ein normiertes Handmoment über dem normierten Radwinkel aufgetragen ist; und
- Figur 6: ein weiteres Diagramm zur Erläuterung des zweiten Ausführungsbeispiels eines Verfahrens zum Betreiben der Fahrzeuglenkung von Figur 1, in dem der Schaltzustand einer Kupplung über dem normierten Radwinkel aufgetragen ist.

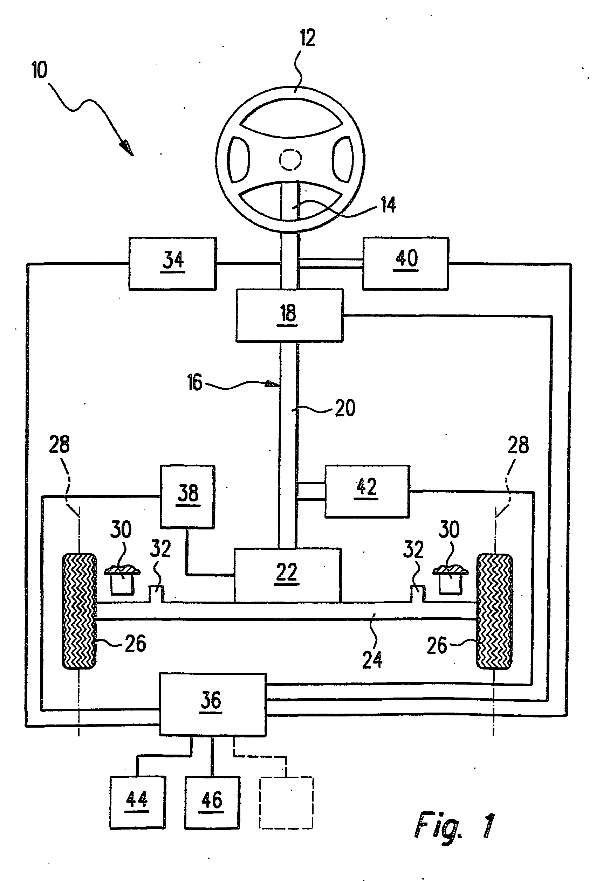

In Figur 1 trägt eine Fahrzeuglenkung insgesamt das Bezugszeichen 10. Sie umfasst ein Lenkrad 12, welches mit einem oberen Bereich 14 einer insgesamt mit 16 bezeichneten Lenkwelle verbunden ist. Über eine schaltbare Kupplung 18 kann der obere Bereich 14 der Lenkwelle 16 mit einem unteren Bereich 20 der Lenkwelle 16 mechanisch verbunden werden.

Der untere Bereich 20 der Lenkwelle 16 arbeitet wiederum auf ein Lenkgetriebe 22. Bei diesem Lenkgetriebe 22 handelt es sich um das Lenkgetriebe 22 einer Zahnstangenlenkung. Bei dieser arbeitet ein mit dem unteren Bereich 20 der Lenkwelle 16 verbundenes Lenkritzel (nicht dargestellt) auf eine Zahnstange 24. An ihren jeweiligen Enden ist die Zahnstange 24 mit Rädern 26 verbunden, welche um eine Achse 28 schwenkbar sind. Der maximale Schwenkwinkel der Räder 26 wird durch jeweilige Anschläge 30 mechanisch begrenzt, welche mit Zapfen 32 an der Zahnstange 24 zusammenarbeiten. Unter dem Begriff einer "mechanischen" Begrenzung wird also verstanden, dass zwei Teile, hier also die Anschläge 30 und die Zapfen 32, in Anlage zueinander gelangen. Auf diese Weise wird der maximale Schwenkwinkel der Räder 26, welcher auch als "Radwinkel" bezeichnet wird, begrenzt.

Die Winkelstellung des oberen Bereichs 14 der Lenkwelle 16 wird durch einen Winkelsensor 34 abgegriffen. Durch diesen Winkelsensor 34 wird also der Lenkradwinkel δ_{LRA} erfasst. Der Winkelsensor 34 liefert Signale an ein Steuer- und Regelgerät 36. Dieses erhält ebenfalls Signale von einem Radwinkelsensor 38, welcher z.B. die Stellung δ_{RI} des Lenkritzels abgreift. Da die Stellung des Lenkritzels und der Radwinkel δ_{RA} der Räder 26 in einem starren Verhältnis zueinander stehen, kann aus dem Ritzelwinkel δ_{RI} auf den Radwinkel δ_{RA} geschlossen werden.

Ausgangsseitig ist das Steuer- und Regelgerät 36 mit einem Lenkradaktuator 40 verbunden, welcher bei offener Kupplung 18 ein Handmoment auf den oberen Bereich 14 der Lenkwelle 16 und hierdurch auf das Lenkrad 12 aufbringt. Außerdem wird durch das Steuer- und Regelgerät 36 noch ein Lenksteller 42 angesteuert, welcher bei offener Kupplung 18 den Winkel δ_{VA} des unteren Bereichs 20 der Lenkwelle 16 einstellt. Hierdurch wird wiederum letztlich der Radwinkel δ_{RA} der Räder 26 eingestellt. Das Steuer- und Regelgerät 36 erhält schließlich noch Signale von anderen fahrzeugseitigen Systemen, wie z.B. einem ABS (AntiBlockierSystem) 44, einem ESP (Elektronisches StabilitätsProgramm) 46, etc.

Die Fahrzeuglenkung 10 arbeitet wie folgt: Im normalen Betriebszustand ist die Kupplung 18 geöffnet. Dies bedeutet, dass zwischen dem Lenkrad 12 und dem oberen Bereich 14 der Lenkwelle 16 einerseits und dem unteren Bereich 20 der Lenkwelle 16 und dem Lenkgetriebe 22 andererseits keine mechanische Verbindung besteht. Im Steuer- und Regelgerät 36 wird aus den Signalen, die das Steuer- und Regelgerät 36 vom Lenkrad-Winkelsensor 34, vom Radwinkelsensor 38, vom ABS 44 und vom ESP 46 erhält, ein Sollwert für einen Regelkreis zur Einstellung des Winkels δ_{VA} des unteren Bereichs 20 der Lenkwelle 16 bestimmt. Über diesen Regelkreis, der den Lenksteller 42, den Radwinkelsensor 38 und das Lenkgetriebe 22 umfasst, wird der Lenksteller 42 so angesteuert, dass ein bestimmter Winkel δ_{VA} bzw. ein bestimmter Winkel δ_{RI} des Ritzels eingestellt wird. Entsprechend ergibt sich an den Rädern 26 ein bestimmter Radwinkel δ_{RA}.

Da in die Bestimmung des Winkels δ_{VA} nicht nur die Eingaben des Fahrers am Lenkrad 12, d.h., der Lenkradwinkel δ_{LRA} eingeht, sondern auch fahrzustandsabhängige Parameter aus dem ABS 44 und dem ESP 46 berücksichtigt werden, ist eine variable Übersetzung zwischen Lenkradwinkel δ_{LRA} und dem Radwinkel δ_{RA} möglich. Auf diese Weise kann z.B. automatisch, ohne dass der Fahrer eingreifen muss, auf bestimmte Fahrsituationen, wie z.B. ein Schleudern, oder auf bestimmte Fahrbahnzustände, wie z.B. Glatteis, reagiert werden.

Um zu verhindern, dass der Fahrer Lenkeingaben am Lenkrad 12 tätigt, welche an den Rädern 26 nicht mehr ausgeführt werden können, da sich deren Radwinkel δ_{RA} bereits in seiner maximalen Endstellung befindet (d.h., dass einer der Zapfen 32 an dem jeweils zugeordneten Anschlag 30 anliegt), wird in einem solchen Fall vom Steuer- und Regelgerät 36 die schaltbare Kupplung 18 geschlossen. In diesem Fall besteht eine mechanische Verbindung zwischen dem oberen Bereich 14 der Lenkwelle 16 und ihrem unteren Bereich 20. Durch dieses Herstellen einer mechanischen Verbindung zwischen den sich in ihren Endstellungen befindlichen Rädern 26 und dem Lenkrad 12 wird somit ein Anschlag für das Lenkrad 12 gebildet, d.h., dass der Benutzer das Lenkrad 12 nicht mehr weiter einschlagen kann.

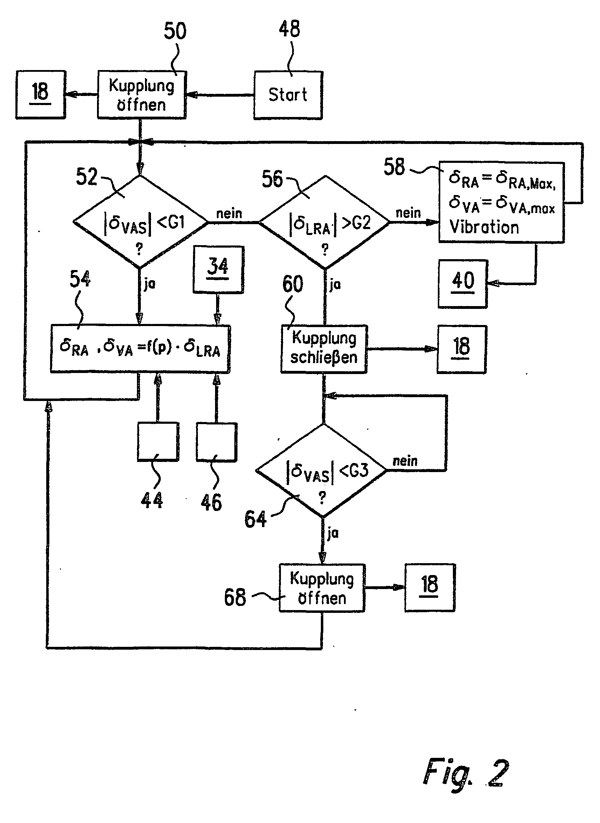

Im Einzelnen erfolgt der Betrieb der in Figur 1 dargestellten Fahrzeuglenkung 10 gemäß einem Verfahren, welches als Computerprogramm im Steuer- und Regelgerät 36 abgelegt ist. Das Verfahren läuft wie folgt ab (vgl. Figur 2) :
Nach einem Startblock 48 (z.B. Einschalten der Zündung) wird im Block 50 die Kupplung 18 geöffnet, sodass keine mechanische Verbindung zwischen dem oberen Bereich 14 der Lenkwelle 16 und dem unteren Bereich 20 der Lenkwelle 16 mehr vorliegt. Im Block 52 wird anschließend abgefragt, ob der Sollwert δ_{VAS} für den Winkel des unteren Bereichs 20 der Lenkwelle 16 betragsmäßig kleiner ist als ein Grenzwert G1. Gemäß diesem Sollwert δ_{VAS} wird der Lenksteller 42 vom Steuer- und Regelgerät 36 über einen Regelkreis angesteuert und ein entsprechender Winkel δ_{VA} und letztlich ein entsprechender Radwinkel δ_{RA} eingestellt.

Ist die Antwort im Block 52 Ja, bedeutet dies, dass sich die Fahrzeuglenkung 10 in ihrem normalen Betriebsbereich befindet, die Zapfen 32 also von den Anschlägen 30 noch beabstandet und der Radwinkel δ_{RA} noch nicht seinen maximal möglichen Wert erreicht hat. In diesem Fall wird im Block 54 der Winkel δ_{VA} für den unteren Bereich 20 der Lenkwelle 16 in Abhängigkeit einerseits vom Winkel δ_{LRA} des Lenkrads 12, der vom Winkelsensor 34 abgegriffen wird, und in Abhängigkeit verschiedener fahrzustands- und fahrbahnabhängiger Parameter P bestimmt, welche vom ABS 44 und vom ESP 46 bereitgestellt werden. In diesem Betriebsbereich wird also eine variable Lenkübersetzung realisiert.

Ist die Antwort im Block 52 jedoch Nein, bedeutet dies, dass einer der Zapfen 32 am entsprechenden Anschlag 30 anliegt und der Radwinkel δ_{RA} seinen maximal möglichen Wert erreicht hat. In diesem Fall wird im Block 56 geprüft, ob der Winkel δ_{LRA} des Lenkrads 12 oberhalb eines Grenzwerts G2 liegt. Beim Grenzwert G2 handelt es sich um jenen Lenkradwinkel δ_{LRA}, der der Endstellung des Ritzelwinkels δ_{RI} bzw. einer Soll-Endstellung des Lenkrads 12 entspricht. Ist die Antwort im Block 56 Nein, bedeutet dies, dass aufgrund der variablen Lenkübersetzung im Block 54 der Lenkradwinkel δ_{LRA} einerseits und der Radwinkel δ_{RA} bzw. der Winkel δ_{VA} des unteren Bereichs 20 der Lenkwelle 16 andererseits nicht synchron laufen. Dann wird im Block 58 der Winkel δ_{VA} des unteren Bereichs 20 der Lenkwelle 16 bzw. der Radwinkel δ_{RA} konstant auf den maximal möglichen Winkel δ_{VA, max} geregelt.

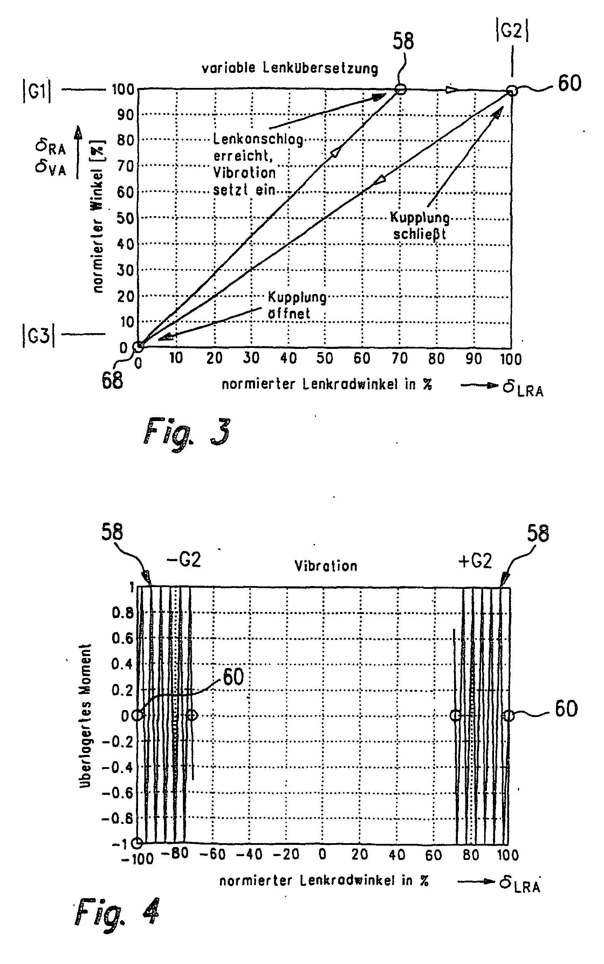

Dies bedeutet, dass auch bei einer Erhöhung des Lenkradwinkels δ_{LRA} keine Erhöhung des Winkels δ_{VA} erfolgt. Darüber hinaus wird im Block 58 der Lenkradaktuator 40 so angesteuert, dass der Fahrer am Lenkrad 12 eine Vibration verspürt (vgl. auch Figuren 3 und 4, Pos. 58). Auf diese Weise wird der Fahrer darauf aufmerksam gemacht, dass der Radwinkel δ_{RA} der Räder 26 bereits seinen maximal möglichen Wert erreicht hat und ein weiteres Einschlagen des Lenkrads 12 somit zu keiner Erhöhung des Radwinkels δ_{RA} führen kann.

In einem nicht dargestellten Ausführungsbeispiel erfolgt alternativ zu dem haptischen Vibrationssignal auch ein optisches und/oder ein akustisches Signal. Vom Block 58 erfolgt ein Rücksprung zum Eingang von Block 52, was bedeutet, dass dann, wenn der Fahrer den Winkel δ_{LRA} des Lenkrads 12 so weit verringert, dass der sich hieraus ergebende Sollwert δ_{VAS} für den Winkel δ_{VA} unterhalb des Grenzwerts G1 kommt, wieder auf die variable Lenkübersetzung vom Block 54 übergegangen und der Vibrationsalarm ausgeschaltet wird.

Ist die Antwort im Block 56 jedoch Ja, bedeutet dies, dass der Fahrer das Lenkrad 12 so weit bewegt hat, dass es die gewünschte Endstellung G2 erreicht hat (Pos. 60 in Figur 3). In diesem Fall befinden sich also zum einen die Räder 26 in ihrer maximal eingeschlagenen Position, in der einer der Zapfen 32 an dem dazugehörigen Anschlag 30 anliegt, und zum anderen befindet sich auch das Lenkrad 12 in einer Soll-Endstellung, die der Endstellung des Ritzelwinkels δ_{RI} entspricht. Daher wird in diesem Fall im Block 60 vom Steuer- und Regelgerät 36 die Kupplung 18 so angesteuert, dass der obere Bereich 14 der Lenkwelle 16 mit dem unteren Bereich 20 mechanisch verbunden wird, die Kupplung 18 also geschlossen wird.

Auf diese Weise wird eine starre mechanische Verbindung zwischen dem Lenkrad 12 über die Lenkwelle 16, das Lenkgetriebe 22 und die Zahnstange 24 mit den Zapfen 32 geschaffen, von denen sich einer am dazugehörigen Anschlag 30 befindet. Somit wirkt dieser mechanische Anschlag 30 auch auf das Lenkrad 12, was ein Weiterdrehen des Lenkrads 12 über seine Soll-Endstellung hinaus verhindert. Hierdurch wird auch ein Abreißen von Kabeln verhindert, die das Lenkrad 12 mit fahrzeugseitigen Einrichtungen verbinden.

Verringert der Fahrer nun den Winkel δ_{LRA} des Lenkrads 12, arbeitet die Fahrzeuglenkung 10 wie eine normale mechanische Fahrzeuglenkung, bei der der Lenkradwinkel δ_{LRA} und der Radwinkel δ_{RA} synchron mit einer festen Lenkübersetzung laufen. Ein Öffnen der Kupplung 18, also ein Trennen des oberen Bereichs 14 der Lenkwelle 16 vom unteren Bereich 20, erfolgt erst dann, wenn im Block 64 festgestellt wurde, dass der Sollwert δ_{VAS} für den Winkel des unteren Bereichs 20 der Lenkwelle 16 betragsmäßig unterhalb eines Grenzwerts G3 liegt. Der Grenzwert G3 wird dabei vorzugsweise so gewählt, dass die Kupplung nur dann geöffnet wird, wenn der Sollwert δ_{VAS} genau Null ist.

Bei dem in Figur 3 dargestellten Ausführungsbeispiel ist dies erst dann der Fall, wenn sich der Lenkradwinkel δ_{LRA} und der Winkel δ_{VA} des unteren Bereichs 20 der Lenkwelle 16 wieder in etwa bei null befinden, das Lenkrad 12 und die Räder 26 also in etwa in ihrer Mittelstellung sind. Dieser Bereich ist in Figur 3 mit dem Bezugszeichen 66 gekennzeichnet. Das Öffnen der Kupplung erfolgt im Block 68. Der Grund, dass erst bei einer Mittelstellung von Lenkrad 12 und Rädern 26 von einer klassischen Fahrzeuglenkung 10 mit starrer Lenkübersetzung wieder zu einer Steer-by-Wire-Fahrzeuglenkung mit variabler Lenkübersetzung übergegangen wird, liegt darin, dass aufgrund von fahrzustands- oder fahrbahnabhängigen Parametern erfolgende Veränderungen der Lenkübersetzung sich in den Mittelstellungen von Lenkrad 12 und Rädern 26 am wenigsten auswirken. Vom Block 68 erfolgt ein Rücksprung zum Eingang des Blocks 52.

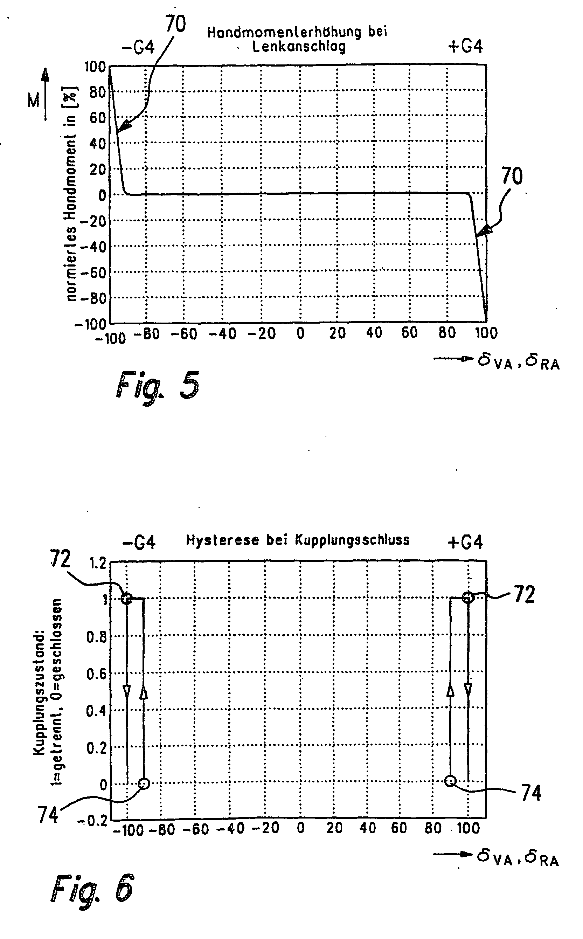

Nun wird unter Bezugnahme auf die Figuren 5 und 6 noch auf ein zweites Ausführungsbeispiel eines Verfahrens zum Betrieb der Fahrzeuglenkung 10 von Figur 1 im Detail eingegangen: In Figur 5 ist ein normiertes Handmoment M am Lenkrad 12 über dem normierten Winkel δ_{VA} aufgetragen. Wie aus Figur 5 ersichtlich ist, wird der Fahrer bei diesem Ausführungsbeispiel durch einen Anstieg des Handmomentes M am Lenkrad 12 darauf hingewiesen, dass sich der Winkel δ_{VA} des unteren Bereichs 20 der Lenkwelle 16 bzw. der Radwinkel δ_{RA} dem jeweiligen maximal möglichen Wert nähert. Der Anstieg des Handmoments M wird vom Steuer- und Regelgerät 36 durch eine entsprechende Ansteuerung des Lenkradaktuators 40 bewirkt. Der Anstieg erfolgt dann, wenn der Winkel δ_{VA} betragsmäßig oberhalb eines Grenzwerts G4 liegt, welcher bei dem vorliegenden Ausführungsbeispiel bei etwa 90 % des maximal möglichen Winkels δ_{VA, max} liegt. Die Erhöhung des Handmoments M ist in Figur 5 mit dem Bezugszeichen 70 gekennzeichnet.

Figur 6 zeigt den Schaltzustand der Kupplung 18 über dem Winkel δ_{VA}. Überbrückt der Fahrer das maximale Moment M des Lenkradaktuators 40, dann wird in dem in Figur 6 mit 72 gekennzeichneten Punkt die Kupplung 18 vom Steuer- und Regelgerät 36 geschlossen. Der Punkt 72 ist dann erreicht, wenn der Radwinkel δ_{RA} der Räder 26 seinen maximal möglichen Wert erreicht hat, also einer der Zapfen 32 am jeweiligen Anschlag 30 in Anlage kommt. Im Gegensatz zu dem oben beschriebenen Ausführungsbeispiel erfolgt hier das Schließen der Kupplung 18 unabhängig davon, ob auch der Winkel δ_{LRA} des Lenkrads 12 einen gewünschten maximalen Wert erreicht hat. Durch das Schließen der Kupplung 18 wird, wie beim obigen Ausführungsbeispiel, eine mechanisch starre Verbindung zwischen Lenkrad 12 und Zapfen 32 hergestellt, sodass die Anschläge 30 auch für das Lenkrad 12 als mechanischer Anschlag wirken. Die tatsächliche Endstellung δ_{LRA, max} des Lenkrads 12 hängt jedoch davon ab, welche Lenkübersetzung zum Zeitpunkt des Schließens der Kupplung 18 vorliegt.

Das Öffnen der Kupplung 18 erfolgt ebenfalls anders als beim obigen Ausführungsbeispiel, nämlich unmittelbar dann, wenn der Fahrer den Lenkradwinkel δ_{LRA} am Lenkrad 12 wieder verringert hat. Um ein Schwingen des Lenkrads 12 und der Fahrzeuglenkung 10 zu vermeiden, erfolgt das Öffnen der Kupplung 18 gegenüber dem Schließen jedoch mit einer gewissen Hysterese, im vorliegenden Fall bei einem Winkel δ_{VA} von 90 % des maximal möglichen Wertes. Dieser Punkt trägt in Figur 6 das Bezugszeichen 74.

## Patentansprüche

1. Verfahren zum Betrieb einer Fahrzeuglenkung (10), bei dem mindestens aus der Stellung (δ_{LRA}) eines Bedienelements (12) eine elektronische Sollgröße (δ_{VAS}) für die Steuerung des Radwinkels (δ_{RA}) mindestens eines Rads (26) des Fahrzeugs gebildet wird, wobei der maximale Radwinkel (δ_{RA, max}) mechanisch begrenzt ist, und bei dem das Rad (26) und das Bedienelement (12) in mindestens einem Betriebszustand mechanisch voneinander getrennt (68) und in mindestens einem anderen Betriebszustand mechanisch miteinander verbunden (60) werden können, wobei dann, wenn der Radwinkel (δ_{RA}) seine mechanische Grenze (G1) erreicht, die mechanische Verbindung zwischen Rad und Bedienelement hergestellt wird (60), sodass ein Anschlag (30, 32) für das Bedienelement (14) gebildet wird, und wobei die Sollgröße (δ_{VAS}) im Sinne einer variablen Lenkübersetzung auch von fahrzustandsspezifischen Parametern (P) abhängt, **dadurch gekennzeichnet, dass** die mechanische Verbindung nur hergestellt wird (60), wenn auch das Bedienelement (12) eine Soll-Endstellung (δ_{LRA, max}) erreicht.

2. Verfahren nach Anspruch 1, **dadurch gekennzeichnet, dass** dann, wenn die Sollgröße (δ_{VAS}) einen Grenzwert (G1) erreicht oder überschreitet, der tatsächliche Radwinkel (δ_{RA}) konstant gehalten wird.

3. Verfahren nach einem der Ansprüche 1 oder 2, **dadurch gekennzeichnet, dass** die mechanische Verbindung zwischen Bedienelement (12) und Rad (26) erst dann wieder aufgehoben (68) wird, wenn der Radwinkel (δ_{RA}) unterhalb eines Grenzwerts (G3) liegt, welcher kleiner ist als der mechanische Grenzwert (G1), sodass eine Hysterese gebildet wird.

4. Verfahren nach Anspruch 3, **dadurch gekennzeichnet, dass** die mechanische Verbindung erst dann wieder aufgehoben wird (68), wenn der Radwinkel (δ_{RA}) null und das Bedienelement (14) in seiner Mittelstellung ist.

5. Verfahren nach einem der vorhergehenden Ansprüche, **dadurch gekennzeichnet, dass** dann, wenn die Sollgröße (δ_{VAS}) oberhalb eines Grenzwerts (G1) liegt, welcher vorzugsweise dem maximalen Radwinkel (δ_{RA, max}) entspricht, ein Warnsignal (58) ausgelöst wird.

6. Verfahren nach Anspruch 5, **dadurch gekennzeichnet, dass** das Warnsignal ein akustisches und/oder ein optisches und/oder ein haptisches Signal, insbesondere eine vibration (58) des Bedienelements (14), umfasst.

7. Verfahren nach einem der vorhergehenden Ansprüche, **dadurch gekennzeichnet, dass** dann, wenn die Sollgröße (δ_{VAS}) oberhalb eines Grenzwerts (G4) liegt, das zur Verstellung des Bedienelements (12) erforderliche Moment (M) erhöht wird (70).

8. Computerprogramm, **dadurch gekennzeichnet, dass** es zur Durchführung des Verfahrens nach einem der vorhergehenden Ansprüche programmiert ist.

9. Steuer- und/oder Regelgerät (36) für eine Fahrzeuglenkung, **dadurch gekennzeichnet, dass** es zur Ausführung des Verfahrens nach einem der Ansprüche 1 bis 7 programmiert ist.

10. Fahrzeuglenkung (10), mit einem Bedienelement (12), mit einer Verarbeitungseinheit (36), welche aus der Stellung (δ_{LRA}) des Bedienelements (12) eine elektronische Sollgröße (δ_{VAS}) für die Steuerung des Radwinkels (δ_{RA}) mindestens eines Rads (26) des Fahrzeugs bildet, mit einem mechanischen Anschlag (30, 32) für den maximalen Radwinkel (δ_{RA, max}), und mit einer schaltbaren Kopplung (18), durch die das Rad (26) und das Bedienelement (12) in mindestens einem Betriebszustand (68) mechanisch voneinander getrennt und in mindestens einem anderen Betriebszustand (60) mechanisch miteinander verbunden werden können, **dadurch gekennzeichnet, dass** sie ein Steuer- und/oder Regelgerät (36) nach Anspruch 9 umfasst.

## Claims

1. Method for operating a vehicle steering system (10), in which an electronic setpoint variable (δ_{VAS}) for the steering of the wheel angle (δ_{RA}) of at least one wheel (26) of the vehicle is formed at least from the position (δ_{LRA}) of an operator control element (12), wherein the maximum wheel angle (δ_{RA, max}) is mechanically limited, and in which the wheel (26) and the operator control element (12) can be mechanically separated (68) from one another in at least one operating state and mechanically connected (60) to one another in at least one other operating state, wherein, when the wheel angle (δ_{RA}) reaches its mechanical limit (G1), the mechanical connection between the wheel and the operator control element is brought about (60) with the result that a stop (30, 32) is formed for the operator control element (14), and wherein, for the sake of a variable steering transmission ratio, the setpoint variable (δ_{VAS}) also depends on driving-state-specific parameters (P), **characterized in that** the mechanical connection is brought about (60) only when the operator control element (12) also reaches a setpoint end position (δ_{LRA, max}).

2. Method according to Claim 1, **characterized in that**, when the setpoint variable (δ_{VAS}) reaches or exceeds a limiting value (G1), the actual wheel angle (δ_{RA}) is kept constant.

3. Method according to one of Claims 1 or 2, **characterized in that** the mechanical connection between the operator control element (12) and the wheel (26) is not disconnected again (68) until the wheel angle (δ_{RA}) is below a limiting value (G3) which is less than the mechanical limiting value (G1), with the result that a hysteresis is formed.

4. Method according to Claim 3, **characterized in that** the mechanical connection is not disconnected (68) again until the wheel angle (δ_{RA}) is zero and the operator control element (14) is in its centre position.

5. Method according to one of the preceding claims, **characterized in that**, when the setpoint variable (δ_{VAS}) is above a limiting value (G1) which preferably corresponds to the maximum wheel angle (δ_{RA, max}), a warning signal (58) is triggered.

6. Method according to Claim 5, **characterized in that** the warning signal comprises an acoustic and/or visual and/or haptic signal, in particular vibration (58) of the operator control element (14).

7. Method according to one of the preceding claims, **characterized in that**, when the setpoint variable (δ_{VAS}) is above a limiting value (G4), the torque (M) which is necessary to adjust the operator control element (12) is increased (70).

8. Computer program, **characterized in that** it is programmed to carry out the method according to one of the preceding claims.

9. Open-loop and/or closed-loop control device (36) for a vehicle steering system, **characterized in that** said open-loop and/or closed-loop control device (36) is programmed to carry out the method according to one of Claims 1 to 7.

10. Vehicle steering system (10), having an operator control element (12), having a processing unit (36) which forms, from the position (δ_{LRA}) of the operator control element (12), an electronic setpoint variable (δ_{VAS}) for controlling the wheel angle (δ_{RA}) of at least one wheel (26) of the vehicle, having a mechanical stop (30, 32) for the maximum wheel angle (δ_{RA, max}), and having a controllable clutch (18) by means of which the wheel (26) and the operator control element (12) can be mechanically separated from one another in at least one operating state (68), and mechanically connected to one another in at least one other operating state (60), **characterized in that** said vehicle steering system (10) comprises an open-loop and/or closed-loop control device (36) according to Claim 9.

## Revendications

1. Procédé pour faire fonctionner une direction (10) d'un véhicule, dans lequel on forme à partir de la position (δ_{LRA}) d'un élément de commande (12), une valeur de consigne électronique (δ_{VAS}) pour la commande de l'angle de roue ((δ_{RA}) d'au moins une roue (26) du véhicule, l'angle de roue maximal (δ_{RA,max}) étant limité mécaniquement, et dans lequel la roue (26) et l'élément de commande (12) peuvent être séparés l'un de l'autre mécaniquement (68) dans au moins un état de fonctionnement et peuvent être connectés l'un à l'autre mécaniquement (60) dans au moins un autre état de fonctionnement, et lorsque l'angle de roue (δ_{RA}) a atteint sa limite mécanique (G1), la connexion mécanique entre la roue et l'élément de commande étant alors établie (60), de sorte qu'une butée (30, 32) pour l'élément de commande (14) soit formée, et la valeur de consigne (δ_{VAS}) dépendant aussi de paramètres (P) spécifiques à l'état de conduite, au sens d'une multiplication de la direction variable, **caractérisé en ce que** la connexion mécanique n'est établie (60) que lorsque l'élément de commande (12) a aussi atteint sa position de fin de course de consigne (δ_{LRA,max}).

2. Procédé selon la revendication 1, **caractérisé en ce que** lorsque la valeur de consigne (δ_{VAS}) a atteint ou dépassé une valeur limite (G1), l'angle de roue effectif (δ_{RA}) est maintenu constant.

3. Procédé selon l'une quelconque des revendications 1 ou 2, **caractérisé en ce que** la connexion mécanique entre l'élément de commande (12) et la roue (26) n'est alors à nouveau supprimée (68) que lorsque l'angle de roue (δ_{RA}) est inférieur à une valeur limite (G3) qui est inférieure à la valeur limite mécanique (G1), de sorte que l'on obtient une hystérésis.

4. Procédé selon la revendication 3, **caractérisé en ce que** la connexion mécanique n'est à nouveau supprimée (68) que lorsque l'angle de roue (δ_{RA}) est nul et que l'élément de commande (14) est dans sa position centrale.

5. Procédé selon l'une quelconque des revendications précédentes, **caractérisé en ce que** lorsque la valeur de consigne (δ_{VAS}) est au-dessus d'une valeur limite (G1), qui correspond de préférence à l'angle de roue maximal (δ_{RA,max}), un signal d'avertissement (58) est déclenché.

6. Procédé selon la revendication 5, **caractérisé en ce que** le signal d'avertissement inclut un signal acoustique et/ou optique et/ou tactile, notamment une vibration (58) de l'élément de commande (14).

7. Procédé selon l'une quelconque des revendications précédentes, **caractérisé en ce que** lorsque la valeur de consigne (δ_{VAS}) est au-dessus d'une valeur limite (G4), le couple (M) nécessaire pour le réglage de l'élément de commande (12) est augmenté (70).

8. Programme informatique, **caractérisé en ce qu'**il est programmé pour mettre en oeuvre le procédé selon l'une quelconque des revendications précédentes.

9. Appareil de commande et/ou de régulation (36) pour une direction de véhicule, **caractérisé en ce qu'**il est programmé pour exécuter le procédé selon l'une quelconque des revendications 1 à 7.

10. Direction de véhicule (10), comprenant un élément de commande (12), une unité de traitement (36), qui forme, à partir de la position (δ_{LRA}) de l'élément de commande (12), une valeur de consigne électronique (δ_{VAS}) pour la commande de l'angle de roue ((δ_{RA}) d'au moins une roue (26) du véhicule, une butée mécanique (30, 32) pour l'angle de roue maximal (δ_{RA,max}) et un embrayage commutable (18), qui permet de séparer mécaniquement l'un de l'autre la roue (26) et l'élément de commande (12) dans au moins un état de fonctionnement (68), et de les connecter mécaniquement l'un à l'autre dans un autre état de fonctionnement (60), **caractérisée en ce qu'**elle comprend un appareil de commande et/ou de régulation (36) selon la revendication 9.
